# EUROPEAN PATENT APPLICATION

(11) **EP 4 358 243 A1**
(43) Date of publication of application: **24.04.2024**
(21) Application number: 22202219.6
(22) Date of filing: 18.10.2022
(51) Int. Cl.: H01M 50/122, H01M 50/124, H01M 50/126, H01M 50/131

(54) **HOUSING SYSTEM AND BATTERY CELL COMPRISING THE SAME**

(71) Applicant: Newfrey LLC, New Britain, CT 06053 (US)
(72) Inventor: AKBARINIA, Alireza, 35394 Gießen (DE); WILL, Peter, 35394 Gießen (DE)
(74) Representative: SBD IPAdmin

(57) **Abstract**

Battery cell (10) and housing system (14) for a battery cell (10) comprising a housing body with a bottom and lateral walls, wherein the bottom and lateral wall comprise a conductive layer (22) comprising a metal material, and the lateral wall further comprises a barrier layer wherein the barrier layer surrounds and is in contact surface with the conductive layer, the bottom being devoid of the barrier layer, and wherein the thermal resistance of the barrier layer is higher than the thermal resistance of the conductive layer.

## Description

The present invention relates to a battery housing system and to a battery cell comprising such housing system. The field of the invention is more particularly that of batteries for hybrid or electric vehicles in which the energy is stored in a storage battery.

As the technology for electric vehicle continues to evolve, there is a need to provide improved power sources, particularly battery subassemblies, for such vehicles. For example, it is desirable to minimize the complexity of battery subassemblies to decrease the costs associated with manufacturing and to better manage thermal propagation within such battery subassemblies.

In the present context, the terms "battery cell", "battery module", "battery section," and "battery pack" (as well as their shortened variants "cell", "module", "section", and "pack") are used to describe different levels of components of an overall battery assembly or battery apparatus. Conventionally a battery cell (for example a Li-ion battery cell) comprises a casing (or housing system) and a battery cell material encapsulated within the casing. The battery cell material includes one or more cathodes, one or more anodes, an electrolyte and a separator composed from a porous polymer or other suitable material to avoid direct contact between the electrodes. Numerous individual battery cells form the building blocks of battery modules. Multiple battery modules (in conjunction with ancillary equipment) in turn make up a battery pack.

Batteries are being required to be diversified in shape and to be reduced in thickness and weight along with improvements in performance. Battery cell casings and housings need to adapt to the diversification in shape without increasing the weight.

US2008286635A1 discloses a battery packaging with a film-shaped laminate including a base material, a barrier layer, and a heat-sealable resin layer laminated sequentially, as a battery packaging material that is easily processed into diverse shapes and is capable of achieving the reduction in thickness and weight.

EP3467897A1 is directed to a battery packaging material that includes a laminate having at least a barrier layer, a heat-sealable resin layer situated on one surface side of the barrier layer, and a polyester film situated on the other surface side of the barrier layer. Such battery packaging material is easily mouldable.

However, a need still exists to provide a cell housing system which is compact, light and which does not decrease the performances of the battery cell material.

The present disclosure is designed to solve the problem mentioned above. Accordingly, the present invention is directed to a housing system according to claim 1 and to a battery cell according to claim 12.

More particularly, the housing system delimits a recess for receiving battery cell material. The housing system comprises a cap and a housing body cooperating together such as to delimit the recess. The housing body comprises a bottom and a lateral wall. The lateral wall and the bottom both comprise a conductive layer with a metal material and directly delimiting the recess. The lateral wall further comprises a barrier layer made of a barrier layer material, wherein the barrier layer surrounds and is in contact surface with the conductive layer, the bottom being devoid of the barrier layer. The thermal resistance of the barrier layer is higher than the thermal resistance of the conductive layer.

Such construction allows an easy thermal management of the battery cell. The barrier layer is only lateral, the bottom is without the barrier layer, and thus a heat transfer through the bottom can occur. The housing system can be compact and is easy to manufacture. For instance, the conductive layer forming the bottom and the lateral wall can be integral or connected together through sheet material bending technics, such as the technics used in sectors like food, cosmetics, pharmaceutical and many other. The lateral sides of the housing are thermally insulated, such that the heat does not spread (or spreads less) laterally to other cells. Such housing system is then adapted to form battery sub-assemblies having thermal management and thermal safety functions.

In this application, "thermal management" function and objective shall mean maintaining a battery and its individual subassemblies withing desired temperature limits (minimum and maximum) and within a desired variation (ΔT) band from one subassembly to another. "Thermal safety" function shall mean limiting heat propagation between battery subcomponents, in particular from cell to cell, with the objective of preventing a thermal runaway event.

In an embodiment, the barrier layer comprises a plurality of insulating gaps (notably fluid gaps and in particular air gaps). The gaps form an insulation space which prevents heat transmission.

In an embodiment, the barrier layer comprises a plurality of sheets of paper. The plurality of sheets of paper may be arranged such as to form the insulation gaps. The paper is light in weight and ensures, with the creation of the air gaps, a thermal insulation.

In an embodiment, the barrier layer material has a thermal conductivity below 1 W . m-1 . K-1. The barrier layer material has a low thermal conductivity in order to avoid thermal transmission.

In an embodiment, the conductivity layer material has a thermal resistance of greater than 5 W · m-1 · K-1. More particularly, in an embodiment, the conductive layer is made of copper material.

In an alternative embodiment, the conductive layer comprises a first sublayer and a second sublayer. The conductivity of the first sublayer may be greater than 5 W · m-1 · K-1. The conductivity of the second sublayer may be greater than 5 W · m-1 . K-1. On contrary to the barrier layer material, the first and/or second sublayer material has a high thermal conductivity such as to receive and transfer heat from the battery cell material.

In an embodiment, the first sublayer material is steel or aluminium and the second sublayer material is graphite. In an embodiment, on the lateral wall the second sublayer is arranged between the barrier layer and the first sublayer. The material of the first sublayer needs to be a material with high thermal conductivity.

In an embodiment, the cap and/or the first and/or the second sublayer is provided with a chemical resistant coating. The chemical resistance coating enables to prevent deterioration of the cap and/or the first and/or the second sublayer.

In an embodiment, the cap and/or the first and/or the second sublayer is provided with an electrical insulating coating. The coating allows to easily insulate the housing from its environment.

In an embodiment, the first sublayer has a thickness between 0.05 mm et 1 mm, in particular of 0.1mm to 0.3mm. In an embodiment, the second sublayer has a thickness between 0.05 mm et 0.1 mm. First and second sublayers form a very thin laminate assembly.

In an embodiment, the barrier layer has a thickness between 0.05 mm et 1 mm, in particular of 0.1mm to 0.3mm. In an embodiment, the cap has a thickness between 0.05 mm and 1 mm, and in particular between 0.1 mm and 0.2 mm. The housing system is very compact and can adapt its shape.

In an embodiment, the lateral wall and/or the bottom is provided with an outer layer comprising a plastic or metal material, wherein the outer layer is in contact surface with the conductive layer and/or the barrier layer. The outer layer may protect the barrier and conductive layers. Besides, the outer layer may hold together the barrier and the conductive layers.

In an embodiment, the different layers are glued together.

The disclosure is also directed to a battery cell comprising a housing system as previously described and battery cell material having side edges, wherein the battery cell material fits within the recess and the side edges are in surface contact with the conductive layer. The battery cell material is in direct contact with the conductive layer. The heat can be transferred to the outside of the cell.

In an embodiment, the cap is laser welded to the housing body. The laser welding technic is easy to implement and provides a good sealing of the cap on the housing body. In another embodiment, the cap can be glued to the housing body. In a further embodiment, sheet material bending technic can be used to connect the cap to the housing body.

In an embodiment, the cap comprises an emergency vent valve and a positive and a negative terminal.

In an embodiment, the battery cell material includes one or more cathodes, one or more anodes, an electrolyte and a separator, and the cap comprises a resealable opening to fill the electrolyte in the recess.

A specific embodiment of the present invention will now be described, by way of example only and with reference to the accompanying drawings, of which:
Fig. 1 shows in a cross-section view a battery cell according to the invention with a housing system according to a first embodiment;
Fig. 2 shows in a cross-section view a battery cell according to the invention with a housing system according to a second embodiment;
Fig. 3A and Fig. 3B schematically show in cross section views a third embodiment of a housing system for a battery cell according to the invention;

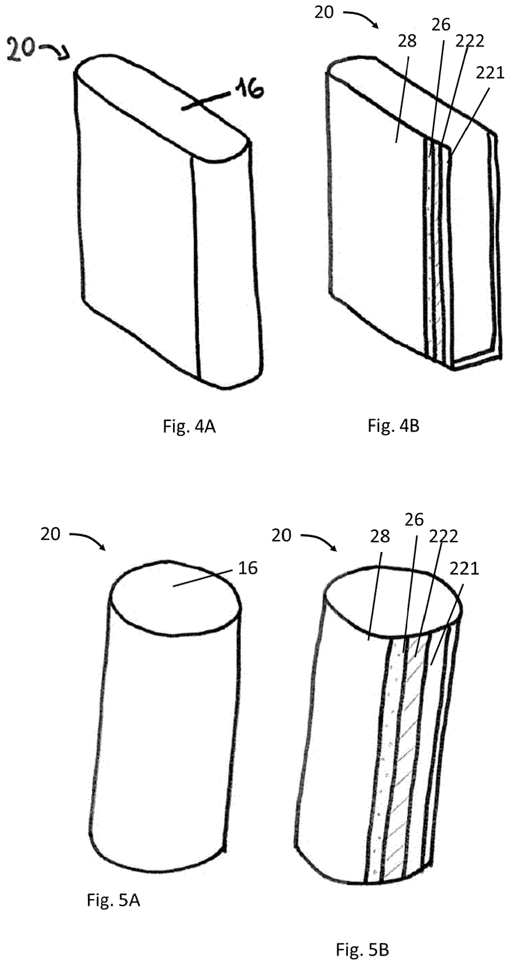

Fig. 4A and Fig. 4B show a housing system without a cap and with a housing body having an oval-shaped cross-section according to an embodiment;
Fig. 5A and Fig. 5B show a housing system without a cap and with a housing body having a cylindrical shape according to an embodiment;
Fig. 6A and Fig. 6B show a housing system without a cap and with a housing body having a parallelepipedal shape according to an embodiment;
Fig. 7 shows schematically a possible structure for a barrier layer of the housing body.

On the different figures, the same reference signs designate identical or similar elements.

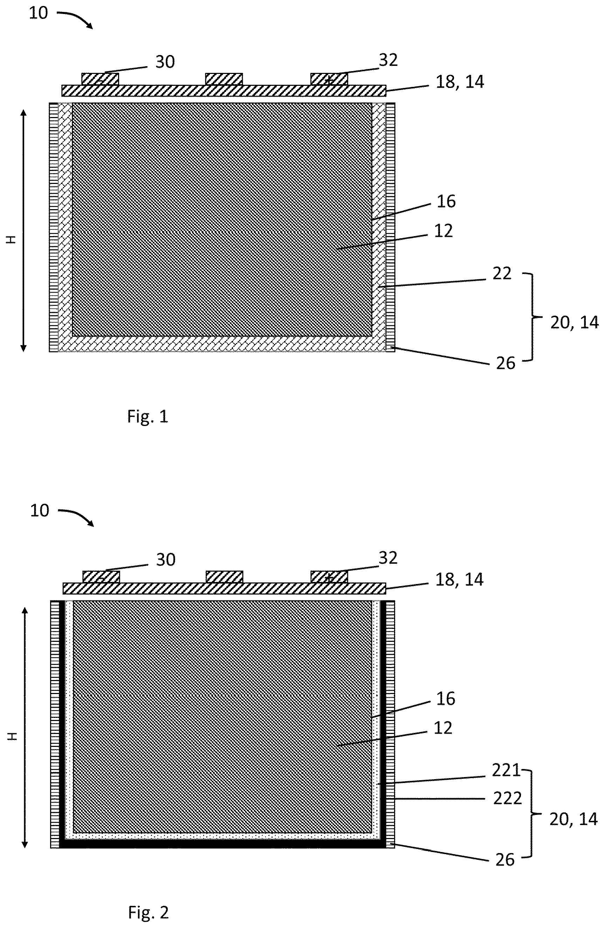

Fig. 1, Fig. 2, Fig. 3A, Fig. 3B shows a battery cell 10. The battery cell 10 comprises battery cell material 12 and a housing system 14. The battery cell material is received in the housing system. In other words, the housing system 14 sealingly encompasses the battery cell material. In a known manner, as mentioned above, the battery cell material includes one or more cathodes, one or more anodes, an electrolyte and a separator composed from a porous polymer or other suitable material to avoid direct contact between the electrodes.

The battery cell material 12 extends in a recess 16 of the housing system 14. More particularly, the housing system 14 comprises a cap 18 and a housing body 20. The housing body comprises a bottom and a lateral wall The bottom and the lateral walls define the recess 16.

The housing body 20 (and more particularly the bottom and the lateral wall comprises a conductive layer 22. The conductive layer 22 is facing and delimits the recess 16. The conductive layer 22 thus forms an internal layer (the innermost layer). The conductive layer 22 may be in surface contact with side edges of the battery cell material 12. The conductive layer 22 forming the bottom and the lateral wall can be integral. In another embodiment, the conductive layer can be made in two parts, one part for the bottom, the other part for the lateral wall, both parts being connected together through sheet material bending technics, such as the technics used in sectors like food, cosmetics, pharmaceutical and many other.

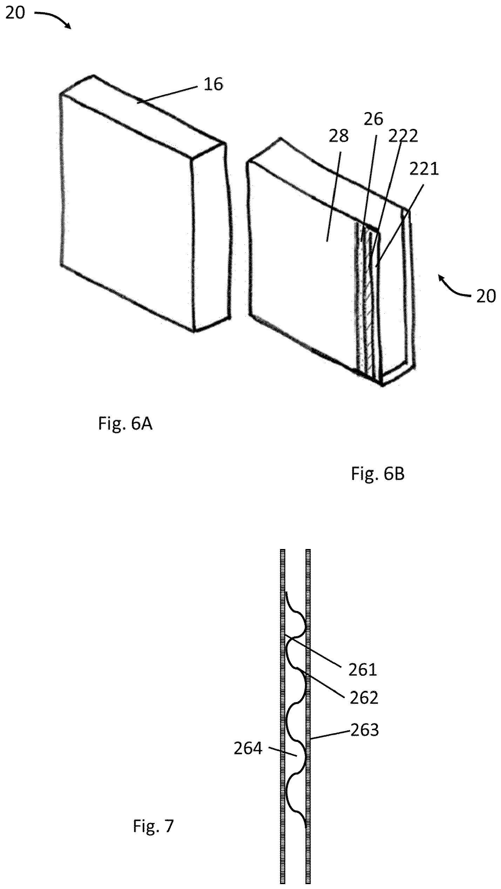

The lateral wall comprises also a barrier layer 26. The barrier layer 26 is made of a low thermal conductivity material. More particularly, the barrier layer is made with material(s) having a thermal and/or electrical resistance. For instance, the barrier layer is made of a plurality of sheets of paper 261, 262, 263. The sheets may be arranged such as to form insulating gaps 264 (for instance fluid gap and notably air gaps). Fig. 7 shows schematically a possible arrangement of the paper sheets to form air gaps. However, in other embodiments, the air gaps 264 may have other shapes or may be formed through another arrangement or layout. The barrier layer has a total maximal thickness between 0.05 mm and 1mm, and more particularly of 0.25mm. The barrier layer 26 is only on the lateral wall. The bottom does not comprise a barrier layer 26.

In a first embodiment of the housing system, as depicted in Fig. 1, the conductive layer 22 is made of metal. The metal could be for instance, copper, steel, aluminium, steel alloy or aluminium alloy. More particularly, the conductive layer is a copper layer. The copper layer may have a thickness between 0.1 mm and 1 mm. More particularly, the conductive layer 22 may have a thickness of between 0.2 and 0.3 mm.

In a second embodiment, depicted in Fig. 2, the conductive layer 22 comprises a first sublayer 221 and a second sublayer 222. The first sublayer 221 is the most internal layer and is directly facing the recess. The second sublayer, on the lateral wall, is between the barrier layer and the first sublayer 222. More particularly, the first sublayer is in surface contact with the second sublayer. The second sublayer is in contact surface with the barrier layer 26.

The first sublayer 221 is for instance made of a material having a thermal conductivity greater than 5 W·m-1·K-1. The first sublayer 221 is made of any material with a chemical compatibility with the battery cell material. For instance, the first sublayer 221 is made of metal. The metal could be steel, aluminium, steel alloy or aluminium alloy. The first sublayer 221 may have a thickness between 0.05 mm and 1 mm. More particularly, the conductive layer 22 may have a thickness of about 0.1mm.

The second sublayer 222 is made of high thermal conductivity material. For instance, a high thermal conductivity material can be considered as being a material having a thermal conductivity in the range of 100 to 3000 W·m-1·K-1. The second sublayer 222 is for instance made of graphite material or copper or copper alloy. The second sublayer 222 may have a thickness of 0.005 mm to 1 mm. For instance, the second sublayer 222 may have a thickness of about 0.1mm. The second sublayer 222 directly contacts the first sublayer 221 on one side and the barrier layer 26 on the other side. For instance first and second sublayers 221, 222 can be glued together. The second sublayer 222 can be electrically isolated, using some thin layer di-electrical glue or insulation material.

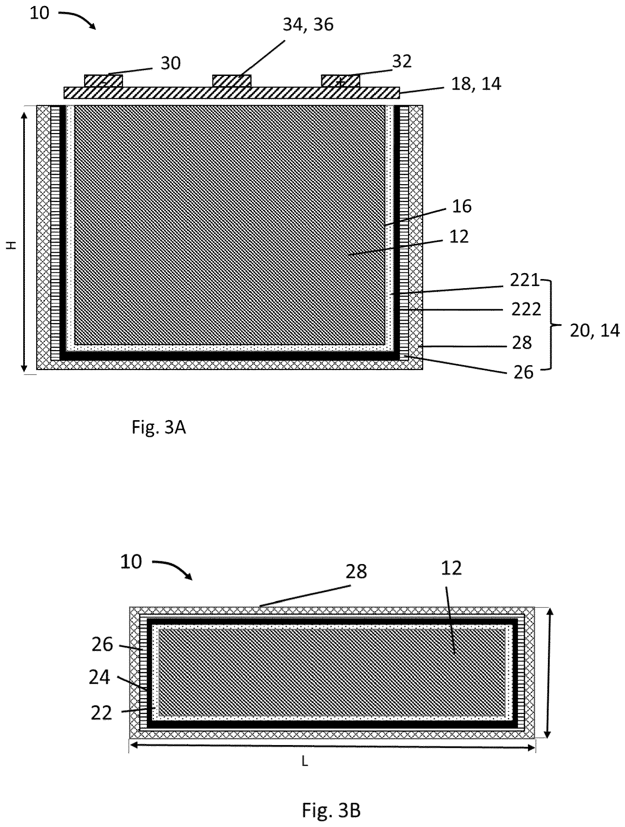

In a third embodiment, depicted in Fig. 3A and Fig. 3B, an outer layer 28 is provided. The outer layer 28 is provided around the barrier layer on the lateral wall side. As depicted in fig. 3A, the outer layer 28 contacts directly the conductive layer at the bottom side. More particularly, as depicted in fig. 3A the outer layer 28 contacts directly the second sublayer 222. However in another embodiment (not represented), the outer layer may contact directly at the bottom side the conductive layer 22, the conductive layer being of homogeneous material, such as described with regard to the first embodiment.

The bottom part and the lateral wall part of the outer layer may be integral, or two separate parts.

In another possible embodiment, the outer layer 28 may only be part of the lateral wall, and the bottom does not comprise an outer layer 28.

The outer layer 28 may be made of plastic or metal material. The outer layer may have a thickness between 0.05 mm and 1 mm, and in particular a thickness of about 0.1mm.

The outer layer and/or barrier layer and/or conductive layer and/or first sublayer and/or second sublayer may be glued together. In an alternative or supplementary embodiment, the outer layer may be used to hold the conductive layer and the barrier layer together.

The conductive layer 22 and/or the outer layer 28 may be provided with a chemical resistant coating and/or an electrical insulating coating. A chemical resistant coating is for instance an epoxy-based, a polyurethane-based, a phenolic-based or a fluoropolymer-based coating. An electrical insulating coating is for example a plastic-based painting.

The housing body 20 cooperates with the cap 18. The cap 18 can be laser welded or glued to the housing body. More particularly, the cap is assembled to the housing body 20 by sheet metal bending technics. The sheet metal bending technics are widely used in the food industry, notably to produce cans. The advantage of such technic is to use a mechanical process to assemble cap and housing body. The housing body and the cap are assembled in such a way as to form a seal. The cap 18 is sensibly flat and may be made of plastic or metal (for instance steel or aluminium) material. The cap 18 can be provided with a chemical and/or electrical resistance coating. The cap can have a thickness between 0.05mm and 1 mm. In particular the cap has a thickness between 0.1mm and 0.2mm.

The cap 18 cap comprises a resealable opening 34 to fill the electrolyte in the recess. The cap may also comprise a positive and a negative terminal 30, 32. The terminals are for instance connected to positive and negative electrodes of the battery cell material.

The cap 18 may also be provided with a venting device or emergency vent valve 36. The venting device for instance may be adapted to fulfil emergency degassing in the event of damage of the battery cell as well as differential pressure compensation in normal work environment.

The bottom may be in direct contact with a cooling device or cooler (not represented) adapted to transfer heat from the battery cell. More particularly, the cooler is adapted to dissipate the heat transferred by the conductive layer. The cooler may be a passive or an active cooler.

The housing system 14 thus produced is a lightweight housing adapted to prevent a thermal propagation and to allow a thermal management of the cells, hence enhancing the battery sub-assembly performances.

The battery cell with such housing system may have a total height H between 10 and 300 mm. The width w of the subassembly may be between 5 and 100 mm. The length L of the sub assembly 20 may be between 10 and 1000 mm.

## Claims

1. Housing system (14) for a battery cell, in particular a prismatic or cylindrical battery cell, the housing system (14) delimiting a recess (16) for receiving battery cell material, the housing system comprising:
- a cap (18), and
- a housing body (20), wherein the cap and the housing body cooperate such as to delimit the recess,
wherein the housing body comprises a bottom and a lateral wall,
wherein the lateral wall and the bottom comprise a conductive layer (22) comprising a metal material, the conductive layer delimiting directly the recess, wherein the lateral wall further comprises a barrier layer (26) made of a barrier layer material,
wherein the barrier layer surrounds and is in surface contact with the conductive layer, the bottom being devoid of the barrier layer,
and wherein the thermal resistance of the barrier layer is higher than the thermal resistance of the conductive layer.

2. Housing system (14) according to claim 1, wherein the barrier layer (26) comprises a plurality of insulating gaps, in particular air gaps.

3. Housing system (14) according to claim 2, wherein the barrier layer (26) comprises a plurality of sheets of paper (261, 262, 263), and wherein the sheets of papers are arranged to form the air gaps (264).

4. Housing system according to any of claims 1 to 3, wherein the conductive layer is made of copper material.

5. Housing system according to any of claims 1 to 3, wherein the conductive layer comprises a first sublayer made of a first sublayer material and a second sublayer made of a second sublayer material different from the first sublayer material.

6. Housing system according to claim 5, wherein the first sublayer material is steel or aluminium and the second sublayer material is graphite, and wherein on the lateral wall the second sublayer is arranged between the barrier layer and the first sublayer.

7. Housing system (14) according to claim 5 or 6, wherein the cap and/or the first sublayer is provided with a chemical resistant coating and/or with an electrical insulating coating.

8. Housing system (14) according to any of claims 5 to 7, wherein the first sublayer (221) has a thickness between 0.05 mm et 1 mm, in particular of 0.1mm to 0.3mm, and wherein the second sublayer (222) has a thickness between 0.05 mm et 0.1 mm.

9. Housing system according to any of claims 1 to 8, wherein the lateral wall and/or the bottom is provided with an outer layer (28) comprising a plastic or metal material, wherein the outer layer is in surface contact with the conductive layer and/or the barrier layer.

10. Housing system (14) according to any of claims 1 to 9 wherein the barrier layer (26) has a thickness between 0.05 mm et 1 mm, in particular of 0.1mm to 0.3mm.

11. Housing system (14) according to any of claims 1 to 10, wherein the cap has a thickness between 0.05 mm and 1 mm, and in particular between 0.1 mm and 0.2 mm.

12. Battery cell (10) comprising a housing system (14) according to any of claims 1 to 11 and battery cell material (12) having side edges, wherein the battery cell material fits within the recess and the side edges are in surface contact with the conductive layer.

13. Battery cell (10) according to claim 12, wherein the cap (18) is assembled to the housing body (20) by sheet metal bending.

14. Battery cell (10) according to claim 12 or claim 13, wherein the cap comprises an emergency vent valve and a positive and a negative terminal.

15. Battery cell (10) according to any of claims 12 to 15, wherein the battery cell material (12) includes one or more cathodes, one or more anodes, an electrolyte and a separator, and wherein the cap comprises a resealable opening to fill the electrolyte in the recess.
